# EUROPEAN PATENT SPECIFICATION

(11) **EP 1 712 375 B1**
(45) Date of publication and mention of the grant of the patent: **01.12.2010**
(21) Application number: 05704046.1
(22) Date of filing: 24.01.2005
(51) Int. Cl.: B60C 9/18, B60C 5/00, B60C 9/20, B60C 9/22

(54) **PNEUMATIC RADIAL TIRE FOR MOTORCYCLE**
RADIALLUFTREIFEN FÜR MOTORRAD
PNEUMATIQUE A STRUCTURE RADIALE POUR MOTOCYCLE

(30) Priority: 26.01.2004 JP 2004016895
(43) Date of publication of application: 18.10.2006
(73) Proprietor: Bridgestone Corporation, Tokyo 104-0031 (JP)
(72) Inventor: Nakamura, Tsutomu, c/o Bridgestone Corporation, Kodaira-shi, Tokyo 1870031 (JP)
(74) Representative: Whalley, Kevin
(86) International application number: PCT/JP2005/000865
(87) International publication number: WO 2005/070705

(56) References cited:
- WO-A-03/099590
- WO-A1-03/099590
- JP-A- 62 113 605
- JP-A- 2002 019 413
- JP-A- 2002 234 032
- JP-A- 2002 234 032
- JP-A- 2003 011 614
- JP-A- 2003 276 404
- JP-A- 2005 001 552

## Description

The present invention relates to a pneumatic radial tire for a motorcycle, especially a high performance motorcycle of so called super sports type that allows high speed cornering by contacting the tread contacting face with the ground up to a side edge position. More specifically, the present invention relates to a low profile pneumatic radial tire for a high performance motorcycle that improves the steering stability during cornering at high speeds while maintaining various performances such as high-speed durability and straight running stability.

In the cornering of a motorcycle in urban areas, a certain camber angle is given to the tire, that is, camber running is performed by inclining the motorcycle. Generally, it is conducted to contact a tread contacting face with the ground by about 50 to 75%, at most, of the entire tread width.

In the general course of developing pneumatic radial tires for motorcycles, optimization of various bending rigidities and the balance thereamong of the belt layer which may influence the steering stability at high speed cornering by largely inclining the motorcycle body while contacting the tread contacting face with the ground up to a side edge position has never been considered.

For example, Patent Publication 1 discloses a tire for a motorcycle exhibiting durability and high-speed durability of the belt improved at lower cost, and excellent running stability by enhancing the impact absorption and uniformity of the tire. However, it does not relate to the optimization of various types of bending rigidities of the belt layer for the purpose of improving the steering stability at high-speed cornering. Patent Publication 1: Patent Application Publication No. 2002-234032 (claims, paragraph [0001] and the like)

In recent years, however, a high performance motorcycle of so called super sports type has been developed, allowing increasing numbers of riders to enjoy sporty driving on freeways. Also special control areas for sporty running rather than usual public roads, such as training fields and circuits allow riders to enjoy sporty running while challenging the limits of steering technique. During such sporty running cornering at a high speed while largely inclining a vehicle body, or so-called large camber running, is frequently conducted. In tires based on the conventional belt design technique and the like, therefore, steering stability in high-speed cornering is increasingly lacking in such large camber running.

It is an object of the present invention to provide a pneumatic radial tire for a motorcycle, which exhibits improved steering stability at high speed cornering while maintaining various performances such as high speed durability and straight running stability.

Attention is also drawn to the disclosure of EP-1213159A.

As the result of thorough examination with respect to the above-described task, the present invention has been made to achieve the aforementioned object.

That is, a pneumatic radial tire for a motorcycle according to the present invention which includes a tread portion, a pair of sidewall portions extending from edges of the tread portion inward in a radial direction of the tire, and bead portions continued to the side walls inward in the radial direction of the tire is provided with a carcass layer of at least one carcass ply having a cord at an angle in a range from 60 to 90 degrees with respect to an equatorial plane of the tire coated with a rubber material so as to make a reinforcement across bead cores embedded in the bead portions, and at least one layer of a steel spiral belt formed by spirally winding substantially in parallel with the equatorial plane of the tire outward of the carcass layer in the radial direction of the tire. A flatness ratio (SH/TW) of a height SH of cross section of the tire to a maximum width TW of a tread surface upon installation on a measurement rim specified by ETRTO under a no-load state at a post cure inflation in a vulcanizing process of the tire is set to be in a range from 0.50 to 0.85. A lateral out-plane bending rigidity (Sb) and a peripheral in-plane bending rigidity (Sa) among bending rigidities of the tread portion are set to be in ranges from 4.9 to 7.7 N/mm (500 to 790 g/mm), and from 5.1 to 7.8 N/mm (520 to 800 g/mm), respectively, and a tread rigidity equilibrium value (K) expressed by a bending rigidity ratio (Sa/Sb) of the peripheral in-plane bending rigidity (Sa) to the lateral out-plane bending rigidity (Sb) is set to be in a range from 0.90 to 1.10.

In the present invention, preferably, a steel cord that forms the steel spiral belt is formed as an open twisting cord with 1x2 structure having a filament diameter set to be in a range from 0.12 to 0.40 mm. In this case, the tread rigidity equilibrium value (K) is preferably in a range from 0.96 to 1.06.

Alternatively, a steel cord that forms the steel spiral belt preferably comprises an open twisting cord with 1x3 structure having a filament diameter in a range from 0.12 to 0.40 mm. In this case, the tread rigidity equilibrium value (K) is preferably in a range from 0.98 to 1.08.

Preferably, a count of the steel cord of the steel spiral belt on an equatorial plane of the tire is in a range from 20 to 60 pieces/25 mm, and the steel cord diameter is in a range from 0.30 to 1.20 mm.

In the pneumatic radial tire for a motorcycle, the steel cord that forms the steel spiral belt may be formed as an open twisting cord with 1x2 structure having a filament diameter set to be in a range from 0.12 to 0.40 mm. In this case, a count of the steel cord is preferably in a range from 30 to 60 pieces/25 mm.

Alternatively, the steel cord that forms the steel spiral belt may be formed as an open twisting cord with 1x3 structure having a filament diameter set to be in a range from 0.12 to 0.40 mm. In this case, a count of the steel cord is preferably in a range from 20 to 42 pieces/25 mm.

The lateral out-plane bending rigidity (Sb), the peripheral in-plane bending rigidity (Sa) and the tread rigidity equilibrium value (K) among various bending rigidities of the tread portion of the low profile pneumatic radial tire for a high performance motorcycle are set to values to be in the specified ranges, respectively for the reasons as described below.

At the cornering of the high performance motorcycle, the front tire is especially likely to have its position changed and to experience repetitive input and output so frequently through such operations as braking before entering a corner, camber running and steering during cornering, and exit from the corner by straightening the driving position for high speed straight running. During braking, especially when running while applying the braking force before entering the corner, the operation is combined with banking and steering. It is critical to set the peripheral in-plane bending rigidity (Sa) of the tread portion to a value equal to or larger than 5.1 N/mm (520 g/mm).

During running at a corner where the operation is combined with frequent banking and steering, it is essential to improve the road holding capability by flexibly deforming the crown of the tire toward the direction of the lateral out-plane bending of the tread portion especially when the tire exhibits a large tread curvature. For this, the lateral out-plane bending rigidity (Sb) of the tread portion has to be kept to a value equal to or smaller than 7.7 N/mm (790 g/mm). However, if it is smaller than 4.9 N/mm (500 g/mm), the absolute value of the lateral out-plane bending rigidity becomes insufficient. If the peripheral in-plane bending rigidity (Sa) is larger than 7.8 N/mm (800 g/mm), the flexible deformation of the crown of the tire based on the above-specified range cannot be achieved. It is essential to set the peripheral in-plane bending rigidity (Sa) to a value equal to or smaller than 7.8 N/mm (800 g/mm).

In the extreme running state while cornering, the rider is required to conduct a series of operations of entering high speed cornering from the straight driving position for high speed straight running, bank running while largely inclining the body, and straightening the position for straight high speed running again, while switching right and left cornering alternately. In the aforementioned state, as the peripheral in-plane bending rigidity and the lateral out-plane bending rigidity of the tread portion are frequently switched alternately, the contributions thereby are also switched repeatedly. It is therefore essential to set the tread rigidity equilibrium value (K) expressed by the bending rigidity ratio (Sa/Sb) with respect to the peripheral in-plane bending rigidity (Sa) and the lateral out-plane bending rigidity (Sb) in the range from 0.90 to 1.10. If such value K deviates from the aforementioned range, fluctuation (fluctuation range) of the surface rigidity equilibrium balance of the tread portion may become excessively large. This may give the rider discomfort driving feel, resulting in deteriorated high speed cornering performance.

For the same reason as described above, it is desirable to set a count of the steel cords of the steel spiral belt of the tire on its equatorial plane to be in the range from 20 to 60 pieces/25 mm. It is also desirable to set the steel cord diameter to be in the range from 0.30 to 1.20 mm.

The present invention provides a low profile pneumatic radial tire for a high performance motorcycle, which improves the steering stability during high speed cornering while maintaining various performances such as the high speed durability and straight running stability.

The invention will be further described with reference to one accompanying drawings, wherein
Fig. 1 is a sectional view of a pneumatic radial tire for a motorcycle according to an embodiment of the present invention.
Fig. 2 is an explanatory view showing a position where a measurement sample is cut from the tread portion of a sample tire.
Fig. 3 is an explanatory view showing how the bending rigidity of the cut sample is measured.

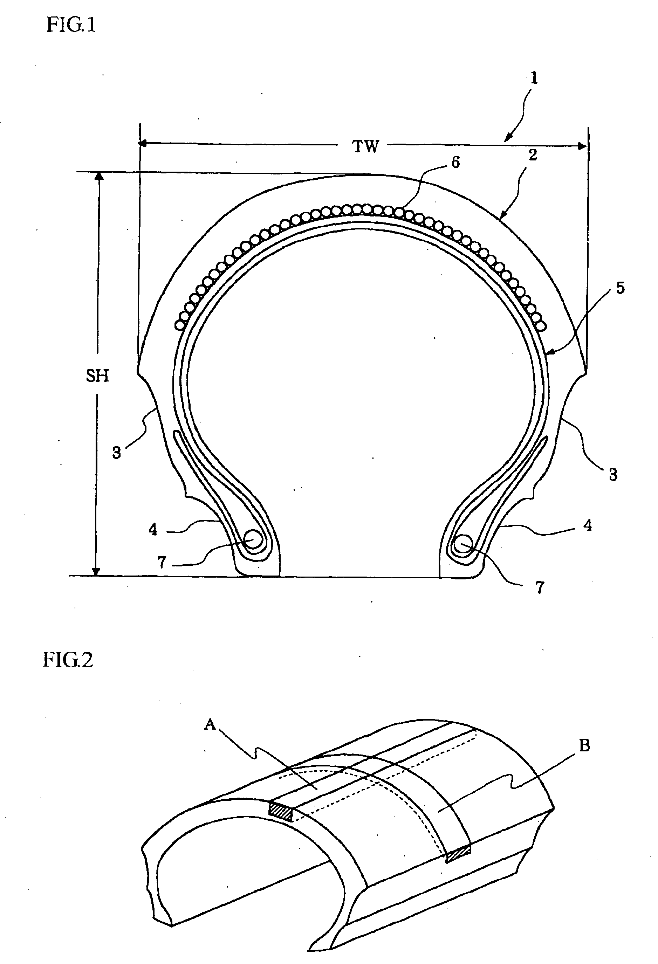

Referring to Fig. 1, a pneumatic radial tire 1 for the motorcycle includes a tread portion 2, a pair of side walls 3 extending inward in the radial direction of the tire from both edges of the tread portion 2, and bead portions 4 continued to the side walls 3 inward in the radial direction of the tire. The aforementioned members are reinforced across bead cores 7 embedded in the bead portions 4 with a carcass layer 5. At least one layer of a steel spiral belt 6 is disposed on the outer surface of the carcass layer 5 in the radial direction of the tire, which is formed by spirally winding substantially in parallel with the equatorial plane of the tire.

The tire according to the present invention is a low profile tire that is appropriately applicable to a high performance motorcycle, which is installed on a measurement rim specified by ETRTO and has a flatness ratio of height SH of cross section of the tire with respect to the tread surface maximum width TW, that is (SH/TW) to be in the range from 0.50 to 0.85 in the no-load state at the post cure inflation in the vulcanizing process of the tire.

The carcass layer 5 is formed of at least one carcass ply (one layer in the drawing) having its cord angled in the range from 60 to 90 degrees with respect to the equatorial plane coated with a rubber material as shown in the drawing. Organic fiber cord, for example rayon cord, nylon cord, polyester cord and the like may be employed as the carcass ply cord.

The steel spiral belt 6 is formed of a steel cord and a rubber coating applied thereto, and disposed substantially in parallel with the equatorial plane of the tire 1. The term "substantially" is used to represent the state where the inclined angle of the steel cord with respect to the equatorial plane E is smaller than 1 degree. It is preferable to spirally wind 1 to 5, and more preferably 2 to 4 steel cords around the outer periphery of the carcass layer 5.

In the present invention, preferably the steel cord that forms the steel spiral belt 6 is an open twisting cord with 1x2 structure having the filament diameter in the range from 0.12 to 0.40 mm. This may provide required values of the lateral out-plane bending rigidity (Sb), the peripheral in-plane bending rigidity (Sa) and the tread rigidity equilibrium value (K). The open twisting cord is known as being formed by twisting the excessively reformed filament, which exhibits excellent rubber permeability into the cord.

In the present invention, it is alternatively preferable to use an open twisting cord with 1x3 structure having the filament diameter in the range from 0.12 to 0.40 mm as the steel cord that forms the steel spiral belt 6. This may also provide required values of the lateral out-plane bending rigidity (Sb), the peripheral in-plane bending rigidity (Sa), and the tread rigidity equilibrium value (K), respectively.

The count of the steel cord of the steel spiral belt 6 on the equatorial plane of the tire is in the range from 20 to 60 pieces/25 mm, and the diameter of the steel cord is in the range from 0.30 to 1.20 mm. Preferably, the steel cord that forms the steel spiral belt 6 is an open twisting cord with 1x2 structure having a filament diameter in the range from 0.12 to 0.40 mm. In this case, it is preferable to set the count of the steel cords on the equatorial plane of the tire having the same steel cord diameter to a value in the range from 30 to 60 pieces/25 mm. Alternatively, the steel cord that forms the steel spiral belt 6 is preferably an open twisting cord with 1x3 structure having a filament diameter in the range from 0.12 to 0.40 mm. In this case, it is preferable to set the count of the steel cords on the equatorial plane having the same steel cord diameter to a value in the range from 20 to 42 pieces/25 mm. This makes it possible to provide required values of the lateral out-plane bending rigidity (Sb), the peripheral in-plane bending rigidity (Sa), and the belt surface rigidity equilibrium value (K).

Examples of the present invention will be described. A front wheel tire (size:120/70ZR17, rim width:3.50 inches, inner pressure:206kPa) and a rear wheel tire (size:190/55ZR17, rim width:6.00 inches, inner pressure: 186kPa) which satisfy the conditions shown in Tables 1 and 2 were combined in accordance with the combinations shown in Table 3. They were installed on the racer type motorcycle of 500 cc displacement such that the steering stability feeling at high speed cornering was evaluated. The resultant evaluations are shown as the index with respect to the figure 100 of the comparative example 3. As the value becomes larger, the result will be better.

The peripheral in-plane bending rigidity (Sa) and the lateral out-plane bending rigidity (Sb) shown in Tables 1 and 2 were measured in the following process.

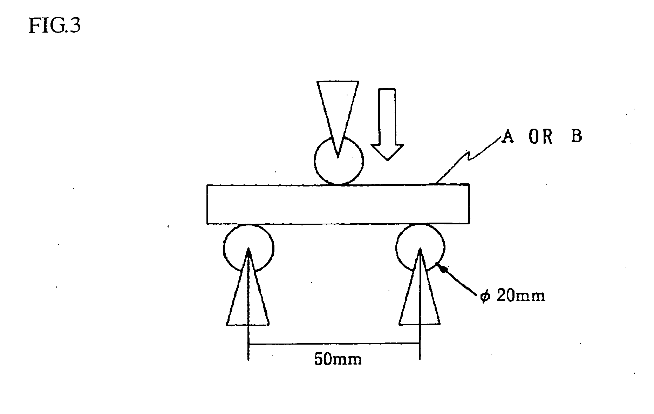

The road contact portion of a sample tire having no pattern groove and tread rubber with the same thickness was cut along the equatorial plane direction and in the direction at 90 degrees with respect to the equatorial plane to provide measurement samples each having a width of 15 mm together with the belts (See A and B in Fig. 2). Referring to Fig. 3, the sample (A) cut along the equatorial direction had its position shifted at 90 degrees so as to be set on the measurement device, and depressed in the direction corresponding to the axial direction of the tire such that the peripheral in-plane bending rigidity (Sa) is measured. The sample (B) cut in the direction at 90 degrees with respect to the equatorial plane is set on the measurement device, and depressed in the direction corresponding to the radial direction of the tire such that the lateral out-plane bending rigidity (Sb) is measured. The rigidity values (force/regeneration) were measured, and the resultant measurements are shown in Tables 1 and 2.

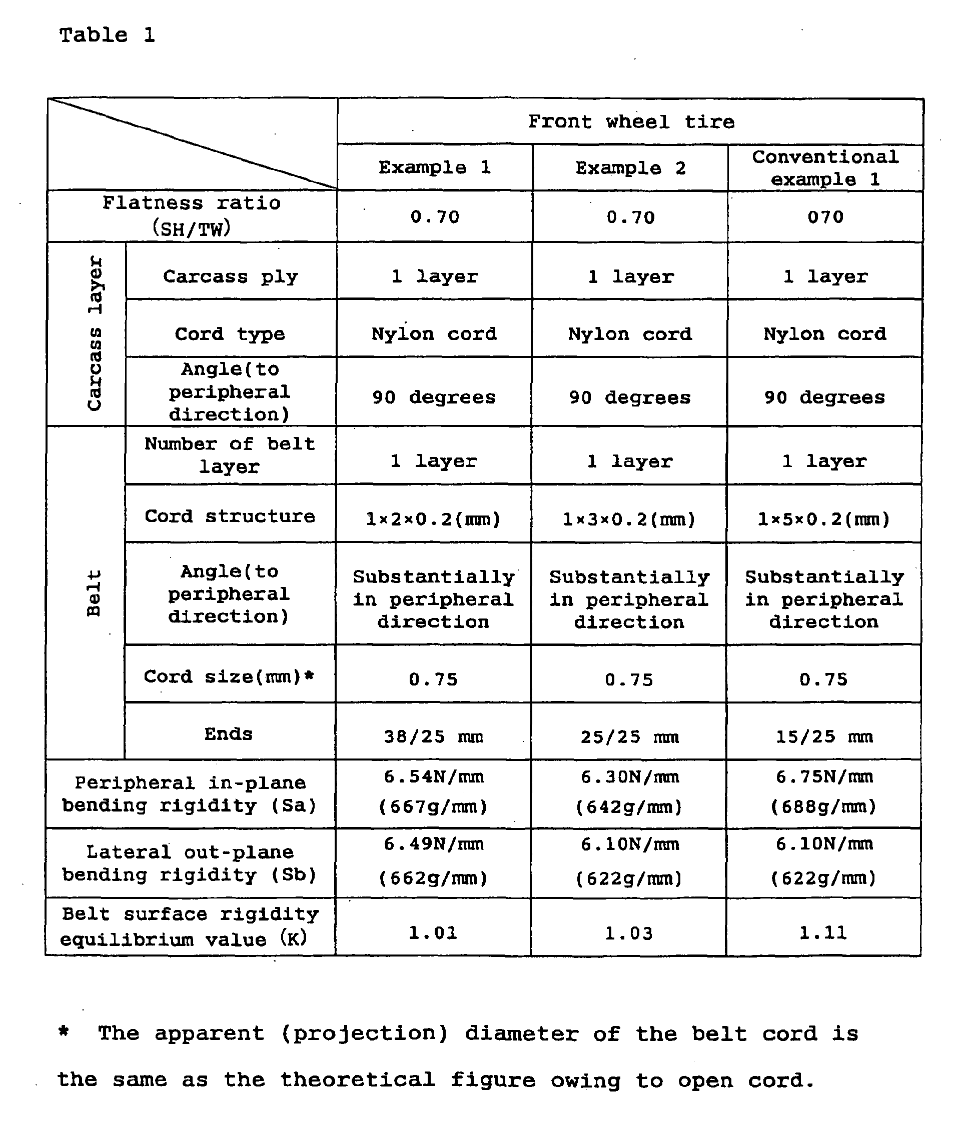

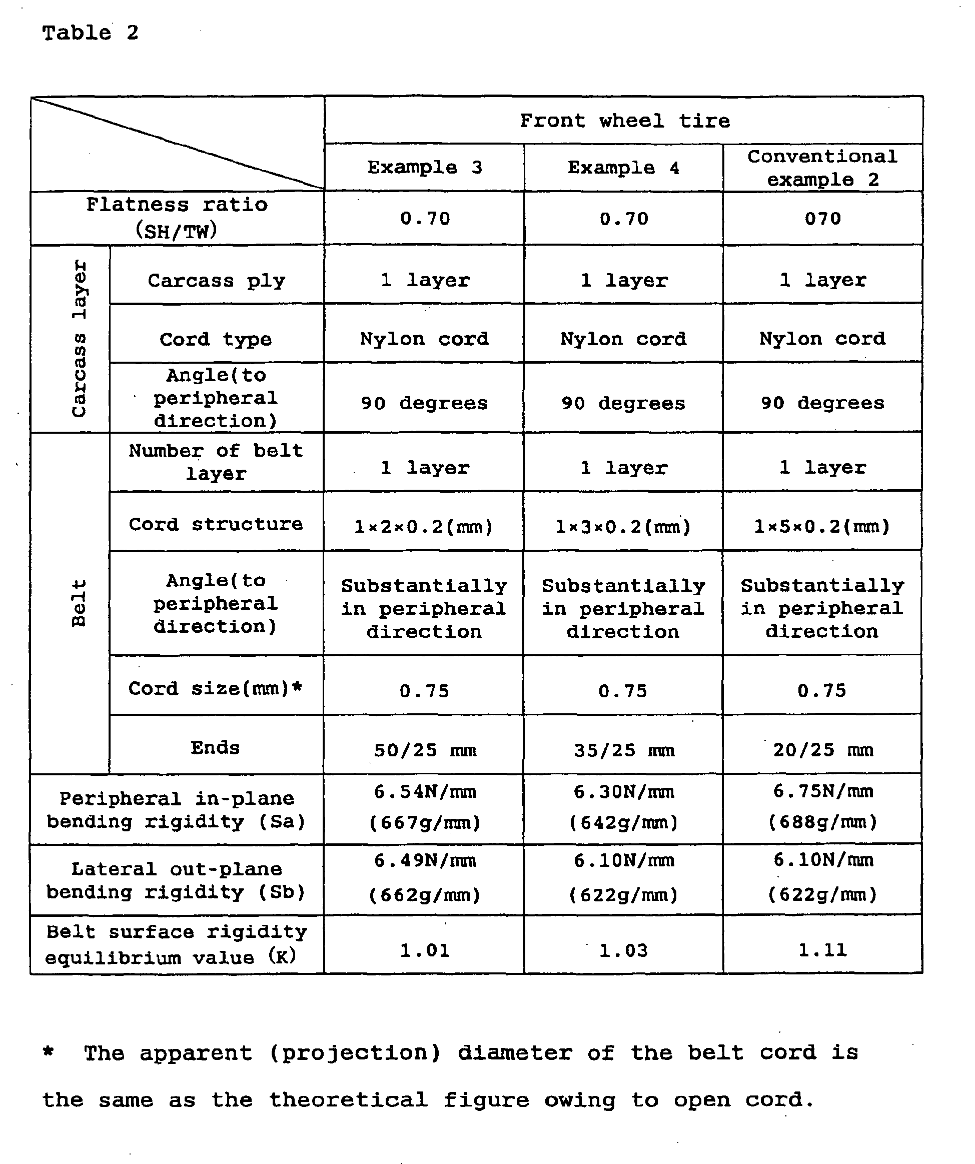

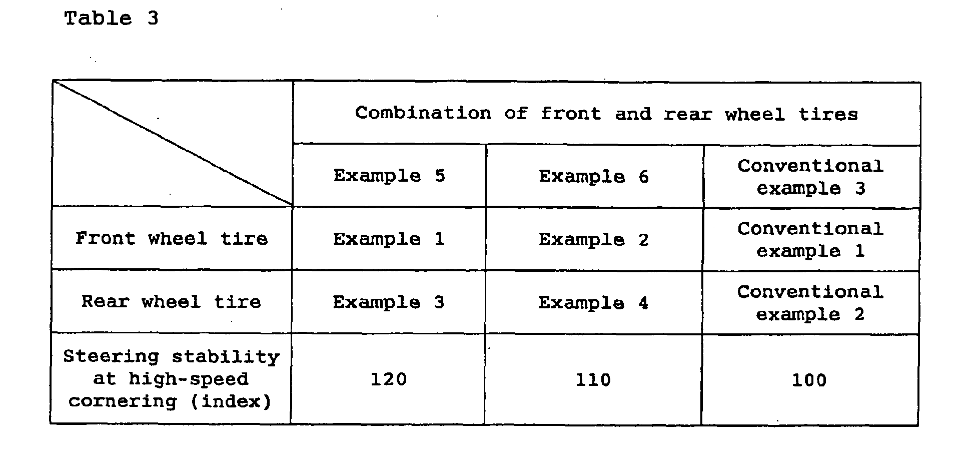

## Claims

1. A pneumatic radial tire (1) for a motorcycle including a tread portion (2), a pair of sidewall portions (3) extending from edges of the tread portion inward in a radial direction of the tire, and bead portions (4) continued to the side walls inward in the radial direction of the tire, provided with a carcass layer (5) of at least one carcass ply having a cord at an angle in a range from 60 to 90 degrees with respect to an equatorial plane of the tire coated with a rubber material so as to make a reinforcement across bead cores (7) embedded in the bead portions, and at least one layer of a steel spiral belt (6) formed by spirally winding substantially in parallel with the equatorial plane of the tire outward of the carcass layer in the radial direction of the tire, wherein:
a flatness ratio (SH/TW) of a height SH of cross section of the tire to a maximum width TW of a tread surface upon installation on a measurement rim specified by ETRTO under a no-load state at a post cure inflation in a vulcanizing process of the tire is set to be in a range from 0.50 to 0.85; and
a lateral out-plane bending rigidity (Sb) and a peripheral in-plane bending rigidity (Sa) among bending rigidities of the tread portion (2) are set to be in ranges from 4.9 to 7.7 N/mm (500 to 790 g/mm), and from 5.1 to 7.8 N/mm (520 to 800 g/mm), respectively, and a tread rigidity equilibrium value (K) expressed by a bending rigidity ratio (Sa/Sb) of the peripheral in-plane bending rigidity (Sa) to the lateral out-plane bending rigidity (Sb) is set to be in a range from 0.90 to 1.10.

2. A pneumatic radial tire for a motorcycle according to claim 1, wherein a steel cord that forms the steel spiral belt (6) comprises an open twisting cord with 1x2 structure having a filament diameter in a range from 0.12 to 0.40 mm.

3. A pneumatic radial tire for a motorcycle according to claim 2, wherein the tread rigidity equilibrium value (K) is in a range from 0.96 to 1.06.

4. A pneumatic radial tire for a motorcycle according to claim 1, wherein a steel cord that forms the steel spiral belt (6) comprises an open twisting cord with 1x3 structure having a filament diameter in a range from 0.12 to 0.40 mm.

5. A pneumatic radial tire for a motorcycle according to claim 4, wherein the tread rigidity equilibrium value (K) is in a range from 0.98 to 1.08.

## Patentansprüche

1. Radial-Luftreifen (1) für ein Motorrad, der einen Laufflächenabschnitt (2), ein Paar von Seitenwandabschnitten (3), die sich von den Kanten des Laufflächenabschnitts in einer Radialrichtung des Reifens nach innen erstrecken, und Wulstabschnitte (4) in Fortsetzung der Seitenwände in der Radialrichtung des Reifens nach innen einschließt, versehen mit einer Karkassenlage (5) aus wenigstens einer Karkassenschicht, die einen Kord in einem Winkel in einem Bereich von 60 bis 90 Grad in Bezug auf eine Äquatorialebene des Reifens hat, beschichtet mit einem Gummiwerkstoff, um so eine Verstärkung über in den Wulstabschnitten eingebetteten Wulstkernen (7) herzustellen, und wenigstens einer Lage eines Stahl-Spiralgürtels (6), geformt durch spiralförmiges Wickeln im Wesentlichen parallel zu der Äquatorialebene des Reifens außerhalb der Karkassenlage in der Radialrichtung des Reifens, wobei:
ein Flachheitsverhältnis (SH/TW) einer Höhe SH des Querschnitts des Reifens zu einer maximalen Breite TW einer Lauffläche nach dem Installieren auf einer durch die ETRTO spezifizierten Messfelge unter einem belastungsfreien Zustand bei einem Aufblasen nach dem Aushärten in einem Vulkanisiervorgang des Reifens so festgesetzt ist, dass es in einem Bereich von 0,50 bis 0,85 liegt, und
eine seitliche nicht-ebene Biegesteifigkeit (Sb) und eine umlaufende ebene Biegesteifigkeit (Sa) unter den Biegesteifigkeiten des Laufflächenabschnitts (2) so festgesetzt sind, dass sie in Bereichen von 4,9 bis 7,7 N/mm (500 bis 790 g/mm) bzw. von 5,1 bis 7,8 N/mm (520 bis 800 g/mm) liegen, und ein Laufflächen-Steifigkeitsgleichgewichtswert (K), ausgedrückt durch ein Biegesteifigkeitsverhältnis (Sa/Sb) der umlaufenden ebenen Biegesteifigkeit (Sa) zu der seitlichen nicht-ebenen Biegesteifigkeit (Sb), so festgesetzt ist, dass er in einem Bereich von 0,90 bis 1,10 liegt.

2. Radial-Luftreifen für ein Motorrad nach Anspruch 1, wobei ein Stahlkord, der den Stahl-Spiralgürtel (6) bildet, einen offenen Verdrillungskord mit einer 1x2-Struktur umfasst, der einen Filamentdurchmesser in einem Bereich von 0,12 bis 0,40 mm hat.

3. Radial-Luftreifen für ein Motorrad nach Anspruch 2, wobei der Laufflächen-Steifigkeitsgleichgewichtswert (K) in einem Bereich von 0,96 bis 1,06 liegt.

4. Radial-Luftreifen für ein Motorrad nach Anspruch 1, wobei ein Stahlkord, der den Stahl-Spiralgürtel (6) bildet, einen offenen Verdrillungskord mit einer 1x3-Struktur umfasst, der einen Filamentdurchmesser in einem Bereich von 0,12 bis 0,40 mm hat.

5. Radial-Luftreifen für ein Motorrad nach Anspruch 4, wobei der Laufflächen-Steifigkeitsgleichgewichtswert (K) in einem Bereich von 0,98 bis 1,08 liegt.

## Revendications

1. Bandage pneumatique radial (1) pour motocycle, englobant une partie de bande de roulement (2), une paire de parties de flanc (3), s'étendant des bords de la partie de bande de roulement vers l'intérieur dans une direction radiale du bandage pneumatique, et des parties de talon (4), s'étendant en continuation des flancs vers l'intérieur dans la direction radiale du bandage pneumatique, comportant une couche de carcasse (5) comprenant au moins une nappe de carcasse comportant un câblé formant un angle compris dans un intervalle allant de 60 à 90 degrés par rapport à un plan équatorial du bandage pneumatique, recouvert d'un matériau de gomme, de sorte à assurer un renforcement à travers des tringles (7) noyées dans les parties de talon, et au moins une couche d'une ceinture d'acier en spirale (6), formée par enroulement en spirale et de manière pratiquement parallèle au plan équatorial du bandage pneumatique, vers l'extérieur de la couche de carcasse, dans la direction radiale du bandage pneumatique, dans lequel :
un rapport d'aplatissement (SH/TW) entre une hauteur SH de la section transversale du bandage pneumatique et une largeur maximale TW d'une surface de la bande de roulement, lors de l'installation sur une jante de mesure spécifiée par la norme ETRTO dans un état sans charge, lors d'un gonflement après la polymérisation dans le cadre d'un processus de vulcanisation du bandage pneumatique, est ajusté de sorte à être compris dans l'intervalle allant de 0,50 à 0,85 ; et
une rigidité à la flexion latérale hors du plan (Sb) et une rigidité à la flexion périphérique dans le plan (Sa), parmi les rigidités à la flexion de la partie de bande de roulement (2), sont ajustées de sorte à être respectivement comprises dans des intervalles allant de 4,9 à 7,7 N/mm (500 à 790 g/mm), et de 5,1 à 7,8 N/mm (520 à 800 g/mm), une valeur d'équilibre de la rigidité de la bande de roulement (K), exprimée par un rapport de la rigidité à la flexion (Sa/Sb) entre la rigidité à la flexion périphérique dans le plan (Sa) et la rigidité à la flexion latérale hors du plan (Sb) étant ajustée de sorte à être comprise dans un intervalle allant de 0,90 à 1,10.

2. Bandage pneumatique radial pour motocycle selon la revendication 1, dans lequel un câblé en acier formant la ceinture d'acier en spirale (6) comprend un câblé à torsion ouverte avec une structure de 1x2, ayant un diamètre de filament compris dans un intervalle allant de 0,12 à 0,40 mm.

3. Bandage pneumatique radial pour motocycle selon la revendication 2, dans lequel la valeur d'équilibre de la rigidité de la bande de roulement (K) est comprise dans un intervalle allant de 0,96 à 1,06.

4. Bandage pneumatique radial pour motocycle selon la revendication 1, dans lequel un câblé d'acier formant la ceinture d'acier en spirale (6) comprend un câblé à torsion ouverte avec une structure de 1x3, ayant un diamètre de filament compris dans un intervalle allant de 0,12 à 0,40 mm.

5. Bandage pneumatique radial pour motocycle selon la revendication 4, dans lequel la valeur d'équilibre de la rigidité de la bande de roulement (K) est comprise dans un intervalle allant de 0,98 à 1,08.
